(19) **Europäisches Patentamt / European Patent Office / Office européen des brevets**

(11) **EP 3 002 708 A1**

(12) **EUROPEAN PATENT APPLICATION**

(43) Date of publication:
06.04.2016 Bulletin 2016/14

(51) Int Cl.:
**G06K 9/00** (2006.01)

(21) Application number: **14187635.9**

(22) Date of filing: **03.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Autoliv Development AB**
**447 83 Vargarda (SE)**

(72) Inventors:
• **Murray, Shane Michael**
**Yokohama-shi, Kanagawa 220-0003 (JP)**
• **Nordqvist, Ulf Lennart**
**Yokohama-shi, Kanagawa 220-0012 (JP)**

(74) Representative: **Kransell & Wennborg KB**
**P.O. Box 27834**
**115 93 Stockholm (SE)**

(54) **Perspective transform of mono-vision image**

(57)    The invention relates to a method and a system of detecting an object in a vicinity of a motor vehicle.

A method of detecting an object in a vicinity of a motor vehicle is provided. The method comprises capturing (S101) an image of the vicinity and performing (S102) object detection on the captured image. Further, the method comprises transforming (S103) a perspective of the captured image, performing (S104) object detection on the perspective-transformed image and verifying (S105) correctness of the object detection, if the object is detected in the captured image as well as in the perspective-transformed image.

A system for performing the method is further provided, which system comprises a camera (101) configured to capture at least one image, a processor (102) and a memory (103) containing instructions (104) executable by the processor for causing the system to detect an object in a vicinity of the motor vehicle.

*Fig. 1*

EP 3 002 708 A1

**Description**

**TECHNICAL FIELD**

The invention relates to a method and a system of detecting an object in a vicinity of a motor vehicle. The invention further relates to a computer program performing the method according to the present invention, and a computer program product comprising computer readable medium having the computer programs embodied therein.

**BACKGROUND**

In the art, object detection is useful for automotive vehicles such as cars, trucks, motor cycles, etc., for detecting obstacles in the form of for instance pedestrians, other vehicles and trees in a vicinity of the vehicle, thereby avoiding accidents.

Such prior art object detection is typically attained by using cameras and/or radars or ultrasonic sensors for detecting obstacles and evaluating the detected obstacles to provide a collision warning or even to activate a countermeasure element such as an airbag of the vehicle or to provide steering or brake control. Typically, a collision warning is provided in response to which a driver of the vehicle accordingly can take decisions on how to navigate the vehicle to avoid an accident. An object detection device is typically located at a front end of the vehicle for forward detection, but can further as a supplement be arranged at a back end of the vehicle for rearward detection.

US 6,834,232 discloses a collision warning and countermeasure system for an automotive vehicle utilizing an active sensor in the form of radar and a passive sensor in the form of a camera. Data from the respective sensor is then fused with data of the other, thereby fusing radar data with captured image data to create a representation from which objects can be detected. A problem in the art is how to create a cost-effective way of performing object detection for a collision warning and countermeasure system.

**SUMMARY**

An object of the present invention is to solve, or at least mitigate, this problem in the art and to provide an improved method and system for detecting an object in a vicinity of a motor vehicle.

This object is attained in a first aspect of the present invention by a method of detecting an object in a vicinity of a motor vehicle. The method comprises capturing an image of the vicinity and performing object detection on the captured image. Further, the method comprises transforming a perspective of the captured image, performing object detection on the perspective-transformed image and verifying correctness of the object detection, if the object is detected in the captured image as well as in the perspective-transformed image.

This object is attained in a second aspect of the present invention by a system for detecting an object in a vicinity of a motor vehicle. The system comprises a camera configured to capture at least one image of said vicinity, a processor and a memory containing instructions executable by the processor, whereby the processor is operative to perform object detection on the at least one captured image, transform a perspective of the at least one captured image, perform object detection on the perspective-transformed image, and verify correctness of the object detection, if the object is detected in the at least one captured image as well as in the perspective-transformed image.

Advantageously, with the proposed invention, by using a captured image and a perspective-transformed representation of the captured image, an object in the vicinity of the motor vehicle can be detected and verified to be a correct detection by using a single camera.

Thus, an image is captured by the single camera typically located in a front end of the motor vehicle, being exemplified in the following by a car. A processor analyses the captured image to detect an object in the image. In practice, a large number of images are typically captured and analysed. The processor may for instance map an identified object in an image with a number of shapes and forms being pre-stored in a database to which the processor has access. Hence, image data extracted from the captured image is compared to pre-stored template data in order to detect an object in the captured image. If there is a match in the comparison between the extracted image data and the template data, the template data is in fact considered to constitute the detected object. The object detection is typically complemented with techniques such as edge detection, e.g. so called Canny edge detection, and feature extraction techniques such as Hough transform. The object in the captured image is considered to correspond to one of the pre-stored object with a certain probability, and an object is thus considered to have been detected in the captured image.

Further, a perspective of the captured image is transformed, i.e. the captured image is transformed from a first coordinate system to a second, perspective-transformed coordinate system. Then, the previously described object detection is performed on the perspective-transformed image using a separate database with different parameters and templates as compared to those chosen for the originally captured image. If it can be concluded that the same object is identified in both the originally captured image and the perspective-transformed image, the correctness of the object detection is verified. Hence, if the object is detected in both the originally captured image and the perspective-transformed image, the object is considered real and not a false object. The proposed invention hence increases reliability in detection of objects in the vicinity of the car and a better representation of the surroundings of the car can be accomplished, with a single camera.

Further provided are a computer program performing the method according to the present invention, and a computer program product comprising computer readable medium having the computer programs embodied therein.

Preferred embodiments of the present invention as defined by the dependent claims will be discussed in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

BRIEF DESCRIPTION OF THE DRAWINGS

The invention is now described, by way of example, with reference to the accompanying drawings, in which:

Figure 1 shows a system for detecting an object in a vicinity of a motor vehicle in accordance with an embodiment of the present invention;

Figure 2 shows a flowchart illustrating an embodiment of a method of detecting an object according to the present invention;

Figure 3 shows an illustration of how a perspective of a captured image is transformed from one perspective to another;

Figure 4 shows the flowchart of the method of Figure 3, but which is further accompanied by images;

Figure 5a shows a flowchart illustrating a further embodiment of a method of detecting an object according to the present invention; and

Figures 5b-e illustrates originally captured images as well as transformed images in which objects are detected according to the embodiment of the method of detecting an object according to the present invention described with reference to Figure 5a.

DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

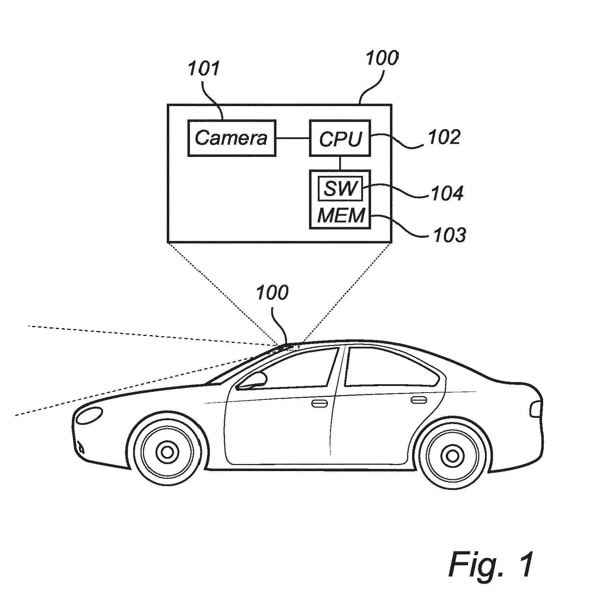

Figure 1 illustrates a system for detecting objects in a vicinity of a motor vehicle in accordance with an embodiment of the present invention. The system 100 for detecting and identifying moving objects is a vision system comprising a video camera 101 utilized to capture images of a surrounding of the motor vehicle being for instance a car 105. The system may for instance be placed in a ceiling of the car 105 close to a front windshield. The camera 101 continuously captures images of the surroundings and supplies image data to a processing device 102 configured to subsequently identify objects in the captured images. The camera 101 comprises a sensor array that produces image data that is processed by the processing device 102 to generate depth maps of the vicinity of the car such that detected objects subsequently can be mapped to a real-world coordinate system. The depth maps are processed and compared to pre-rendered templates of target objects that could appear in the surroundings of the car. Theses target object templates are stored in a memory 103 operatively coupled to the processing device 102.

A target list may be produced by the processing device 102 matching the pre-rendered templates to the depth map image data. The system processes the target list to produce target size and classification estimates. The target is then tracked as it moves and the target position, classification and velocity are determined.

A classification system is used for classifying detected objects in the vicinity of the car, such as trucks, cars, motorcycles, pedestrians, etc. The processing device 102 may thus classify the detected objects and provide an output relating to the type of object that appears in the image data captured by the camera 101. The processing device 102 may be trained with exposure to many different types of objects from many different points of view, so that it is able to make an accurate determination as to the type of object that is detected. Known types of objects can be stored in a database for future reference.

As previously has been discussed, the camera 101 captures an image of the vicinity of the car on captured image the processing device 102 performs object detection. Further, the processing device 102 transforms a perspective of the captured image and again performs object detection, this time on the perspective-transformed image. If the same object is detected in both images, the correctness of the object detection is considered verified, i.e. the detected object is considered to be a real object and a driver of the car may be informed accordingly by means of an audio and/or visual indication, or sent to another Driver Assistance System such as Active Emergency Braking or Adaptive Cruise Control. Further, the image data pertaining to the detected object may be stored as template data in the memory 103 for future use. To the contrary, should the object not be detected in both images, but only in one of the images, the object is considered to be a false object, in which case there is no need to inform the driver accordingly and the image data can be discarded.

With further reference to Figure 1, in the object detection system 100, the processing device 102 performs the method according to embodiments of the present invention. This processing device 102 is typically embodied in the form of one or more microprocessors arranged to execute a computer program 104 downloaded to the storage medium 103 associated with the microprocessor, such as a Random Access Memory (RAM), a Flash memory or a hard disk drive. The processing device 102 is arranged to carry out the method according to embodiments of the present invention when the appropriate computer program 104 comprising computer-executable instructions is downloaded to the storage medium 103 and executed by the processing unit 102. The storage medium 103 may also be a computer program product comprising the computer program 104. Alternatively, the computer program 104 may be transferred to the storage medium 103 by means of a suitable computer program product, such as a Digital Versatile Disc (DVD) or a memory stick. As a further alternative, the computer program 104 may be downloaded to the storage medium 103 over a network. The processing unit 102 may alternatively be embodied in the form of a digital signal processor (DSP), an application specific integrated circuit (ASIC), a field-programmable gate array (FPGA), a complex programmable logic device (CPLD), etc.

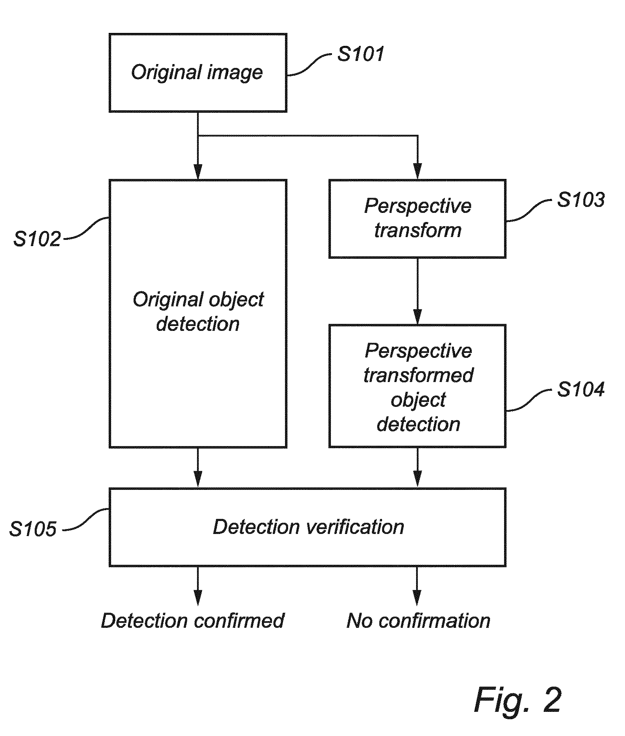

Figure 2 shows a flowchart illustrating an embodiment of the method of detecting an object according to the present invention. Reference is further made to Figure 1 for structural elements. In a first step S101, the processor 102 controls the camera 101 to capture images of the vicinity of the car 105 on which the object detection system 100 is mounted. In a subsequent step S102, object detection is performed on the captured image. A common method used is to have the processor 102 extract image data from the captured image and compare the extracted data with template data pre-stored in the memory 103, which template data represents an know shape and form, such as squares, rectangles, ovals, etc. If the extracted image data can be matched to one or more templates, the template data corresponding to the best match is selected, and an object having the shape of the selected template is considered to have been detected in the captured image. The best match can be determined by applying known statistical methods such as image cross correlation, or singular value decomposition.

Further, in step S103, a perspective of the captured image is transformed, and object detection is subsequently performed on the perspective-transformed image in step S104. In step S105, the processor 102 determines whether the object was detected in both the originally captured image and the perspective-transformed image. If so, the detected object is indeed considered to be a real object, i.e. correctness of the detection is verified, and the driver may be informed visually or audibly thereof, for instance in the form of a collision warning via a Driver Assistance System such as Active Emergency Braking or Adaptive Cruise Control. If not, the detected object is considered to constitute a falsely detected object, and no further action is taken.

Advantageously, with the embodiment of the method of the present as illustrate in Figure 2, reliable detection of potentially dangerous objects is enabled. Further, a cost-effective system for performing the reliable object detection is provided in that a single camera is used as optical sensor. Further advantageous is that object detection will be performed on the originally captured image as well as on the perspective-transformed image, resulting in a first and a second detection of the object in the respective image. Hence, the size and shape of the object is different in the original and the transformed image, whereby two independent detections are performed, and the correctness of the detection is considered to be confirmed if the object is detected in both images. The determination as to whether the same object is detected in the original image and the transformed image can be undertaken using common methods such as calculating Euclidian distances or Mahalanobis distance between the positions of the detections on both images.

Further, from the captured images, object type (truck, car, motor cycle, etc.) can be determined by comparing with template data having been classified in different categories, the position of the object in the captured images can be determined, and possible also its velocity by comparing a number of subsequent images.

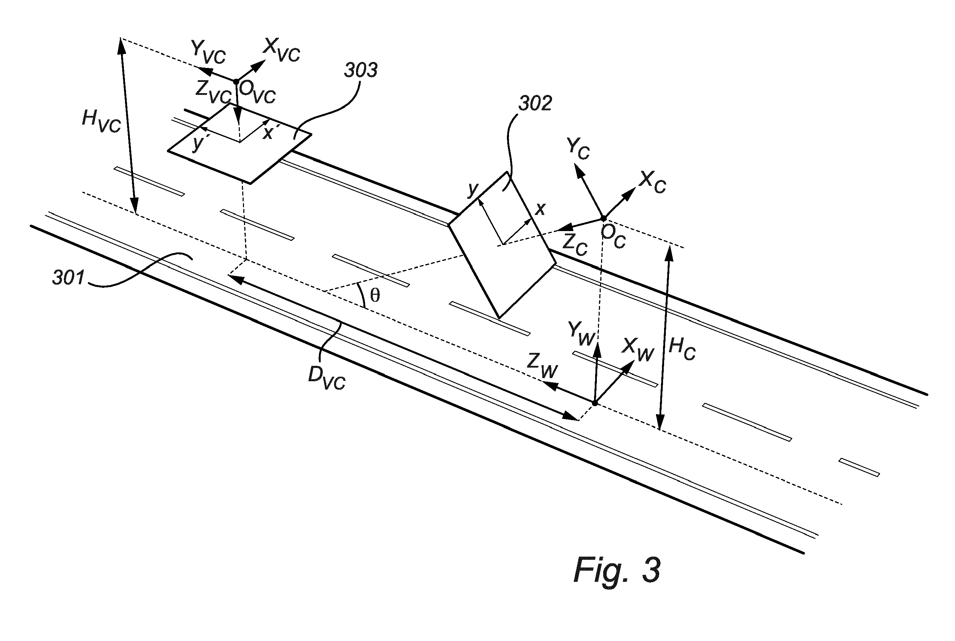

Figure 3 shows an illustration of how a perspective of a captured image is transformed from one perspective (i.e. that of the originally captured image) to another (i.e. to that of the perspective-transformed image). The coordinate-system denoted ($O_w$, $X_w$, $Y_w$, $Z_w$) represents vehicle coordinates, while ($O_c$, $X_c$, $Y_c$, $Z_c$) represents the camera-view coordinates. As can be deducted from Figure 3, the illustrated camera-view is accomplished e.g. by placing the camera (not shown) in a ceiling of a car close to a front windshield of the car as previously illustrated in Figure 1. Hence, with reference to Figure 3, the camera is located on a distance $H_c$ above the roadway 301 and an optical axis of the camera incides with the roadway 301 at an angle $\theta$.

When the viewpoint $O_c$, whose location is ($t_x$, $t_y$, $t_z$), rotates with angle $\theta$ about axis $X_w$, by angle $\rho$ about axis $Y_w$, and by angle $\varphi$ about axis $Z_w$, the relation between the vehicle-coordinate system and the camera-coordinate system is:

$$[X_c \ Y_c \ Z_c]^T = R_z R_y R_x [X_w - t_x \ \ Y_w - t_y \ \ Z_w - t_z]^T$$

where

$$R_x = \begin{bmatrix} 1 & 0 & 0 \\ 0 & cos\theta & sin\theta \\ 0 & -sin\theta & cos\theta \end{bmatrix}, R_y = \begin{bmatrix} cos\rho & 0 & -sin\rho \\ 0 & 1 & 0 \\ sin\rho & 0 & cos\rho \end{bmatrix}$$

$$R_z = \begin{bmatrix} cos\varphi & sin\varphi & 0 \\ -sin\varphi & cos\varphi & 0 \\ 0 & 0 & 1 \end{bmatrix}$$

The transformation between $O_c$, $X_c$, $Y_c$ and $Z_c$ and the plane x and y of the captured image 302 can be expressed by using a focal length f of the camera:

$$x = \frac{fX_c}{Z_c} , y = \frac{fY_c}{Z_c}$$

Further with reference to Figure 3, the coordinate-system denoted ($O_{vc}$, $X_{vc}$, $Y_{vc}$, $Z_{vc}$) represents transformed camera-view coordinates. That is, a perspective-transformation of the captured image 302 will result in the transformed image 303. When the transformed viewpoint $O_{vc}$ is located at (o, $H_{vc}$, $D_{vc}$), the transformed, or virtual, camera-view coordinates ($O_{vc}$, $X_{vc}$, $Y_{vc}$, $Z_{vc}$) can be calculated from the vehicle coordinates, and the transformed (virtual) image plane coordinates x' and y' from the transformed camera-view coordinates. It is assumed that all objects projected onto the image plane are projected on the roadway plane whose $Y_w$ is zero. These objects are considered to be planar objects. The originally captured image 302 can thus be perspective-transformed into image 303 as:

$$x' = \frac{f'}{H_{vc}} \cdot \frac{H_c x}{f sin\theta - y cos\theta}$$

$$y' = \frac{f'}{H_{vc}} \cdot \left\{ \frac{H_c(f\cos\theta + y\sin\theta)}{f\sin\theta - y\cos\theta} - D_{vc} \right\}$$

where f' is the focal length of the "transformed" camera. As can be deducted from Figure 3, the perspective-transformed image 303 results in a top-view of the roadway 301 (and any object located on the roadway).

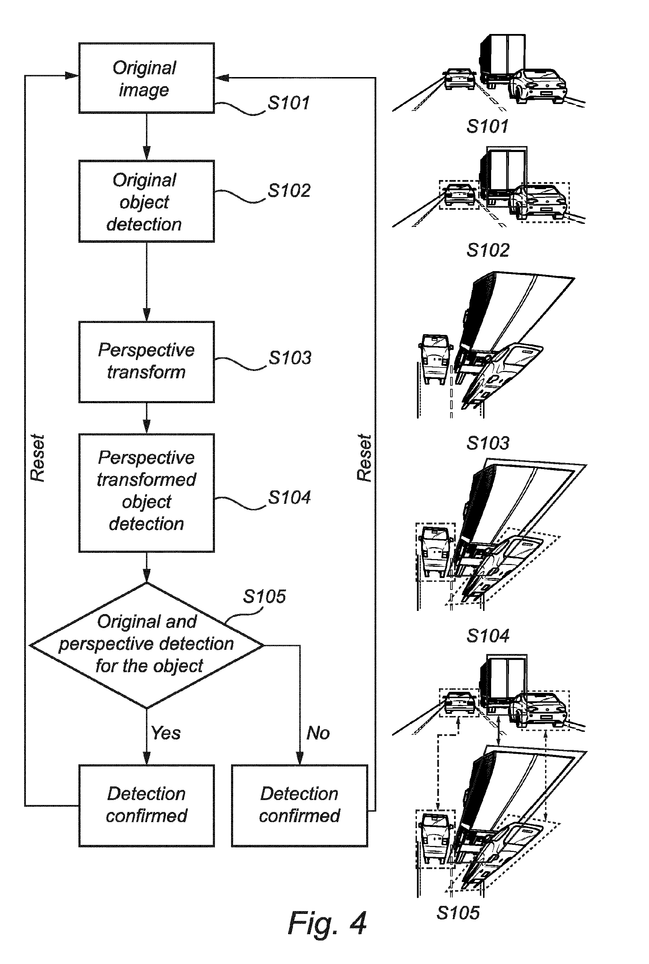

Figure 4 shows the flowchart of the method of Figure 3, but which flowchart in Figure 4 further is accompanied by images for illustrating a practical implementation of the method according to the present invention. In a first step S101, the processor 102 controls the camera 101 (being a front view camera) to capture images of the vicinity of the car on which the object detection system 100 is mounted. Thus, as can be seen in a right-hand side of Figure 4, an image denoted S101 is captured, which contains three objects to potentially be detected, in the form of two cars and one truck.

In a subsequent step S102, object detection is performed on the captured image. A common method used is to have the processor 102 extract image data from the captured image and compare the extracted data with template data pre-stored in the memory 103, which template data represents an know shape and form. In this particular example, as is shown in the image denoted S102, the left-most car is matched to a square, while the truck and the right-most car is matched to a rectangle, respectively. Thus, three objects have been detected in the captured image.

Further, in step S103, a perspective of the captured image is transformed, as has been discussed in detail with reference to Figure 3, resulting in the image denoted S103, containing three transformed objects (step S103 could as shown in Figure 2 be undertaken concurrently with step S102). Object detection is subsequently performed on the perspective-transformed image in step S104 and as can be seen in the corresponding image, the two cars and the truck are detected. In step S105, the processor 102 determines whether the objects were detected in both the originally captured image and the perspective-transformed image (see images S102 and S104, respectively). In this particular example, the two cars and the truck have indeed been detected and the correctness of the detection can thus be verified as is illustrated in the two images denoted S105.

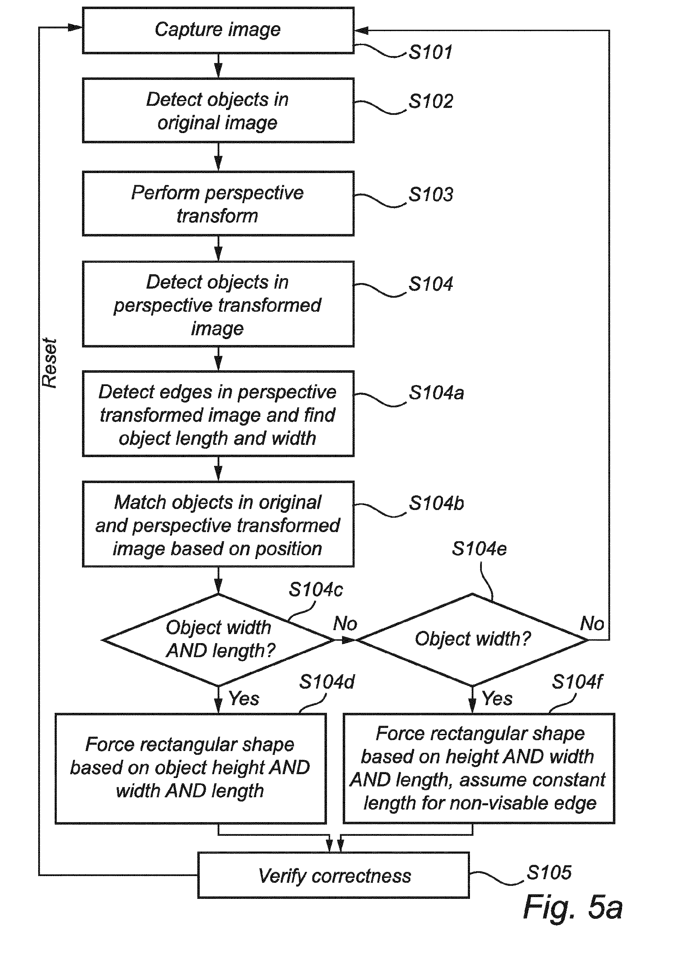

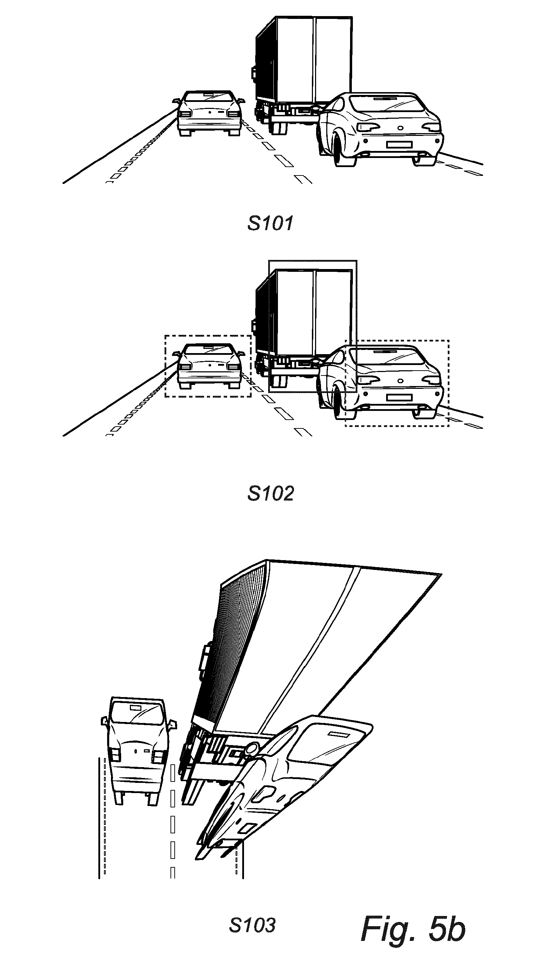

Figure 5a shows a flowchart illustrating further embodiments of the method of detecting objects according to the present invention. In a first step S101, the processor 102 controls the camera 101 (being a front view camera) to capture images of the vicinity of the car on which the object detection system 100 is mounted. Thus, as can be seen in a top image of Figure 5b, an image denoted S101 is captured, which contains three objects to potentially be detected, in the form of two cars and one truck.

In a subsequent step S102, object detection is performed on the captured image. A common method used is to have the processor 102 extract image data from the captured image and compare the extracted data with template data pre-stored in the memory 103, which template data represents an know shape and form. In this particular example, as is shown in the middle image denoted S102 in Figure 5b, the left-most car is matched to a rectangle, as is the truck and the right-most car. Thus, three objects have been detected in the captured image.

Further, in step S103, a perspective of the captured image is transformed, as has been discussed in detail with reference to Figure 3, resulting in the bottom image denoted S103 in Figure 5b, containing three transformed objects. Object detection is subsequently performed on the perspective-transformed image in step S104 and as can be seen in the corresponding image, the two cars and the truck are detected. Again, different template data is used for the perspective-transformed image as compared to the originally captured image.

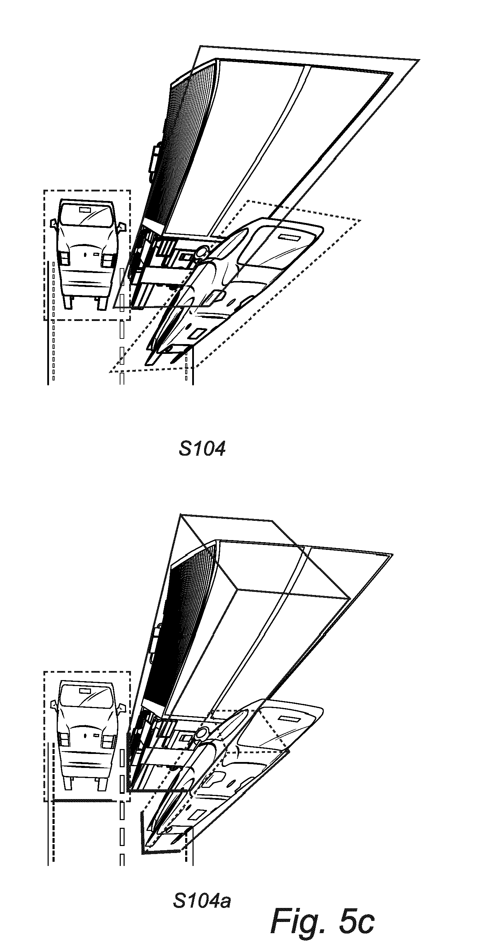

Now, in a comparison with the embodiment described with reference to Figure 4, in a further step S104a, a length and/or width of an object in the perspective-transformed is detected applying e.g. edge detection. In this exemplifying embodiment, it can be seen in the transformed image denoted S104a in Figure 5c that a width of the left-most car is detected, as well as the length and width of the truck and the right-most car, respectively.

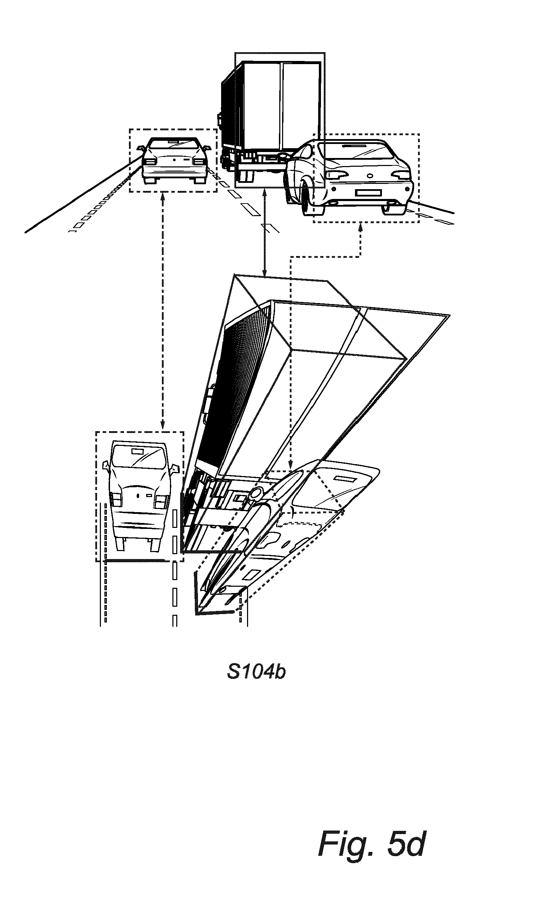

As was discussed in detail with reference to Figure 3, the position $(O_c, X_c, Y_c, Z_c)$ of the objects in the originally captured image and the positon $(O_{vc}, X_{vc}, Y_{vc}, Z_{vc})$ of the objects in the perspective-transformed image can be related to the actual position $(O_w, X_w, Y_w, Z_w)$ of the car. In step S104b, objects the edges of which have been detected in the perspective-transformed image S104b are matched to objects detected in image S102 based on position of the respective object, as is illustrated in Figure 5d. Thus, it is assumed that the edges detected for the right-most car in the transformed image S104 can be matched to the right-most car of the originally captured image, since their positions corresponds.

In step S104c, if the length and width of an object was detected in step S104a, the method proceeds to step S104d where the shape and form of the object can be determined by taking into account height (as detected from the object detection of the originally captured image in step S102, but adjusted for the distance to the object) as well as length and width of the object. Thus, a volume of the object can be determined, which advantageously can be evaluated to determine object type; for instance, the volume of a truck differs substantially from the volume of a car.

In step S104c, if only the width of an object was detected in step S104a, the method proceeds to step S104e and further to step S104f where the shape and form of the object can be determined by taking into account height and width of the object, in which case an area of the object can be determined. A length can further be assumed or estimated, if the length was not detected in step S104a. Thus, as in step S104d, a volume of the object can be determined, which advantageously can be evaluated to determine object type, albeit with less certainty since the object length needs to be estimated.

In both steps S104d and S104f, the object is "forced" into the volume that can be outlined by taking into account detected height, width and length. Hence, the object is advantageously assumed to take on the shape of a rectangular prism defined by the detected height, width and length.

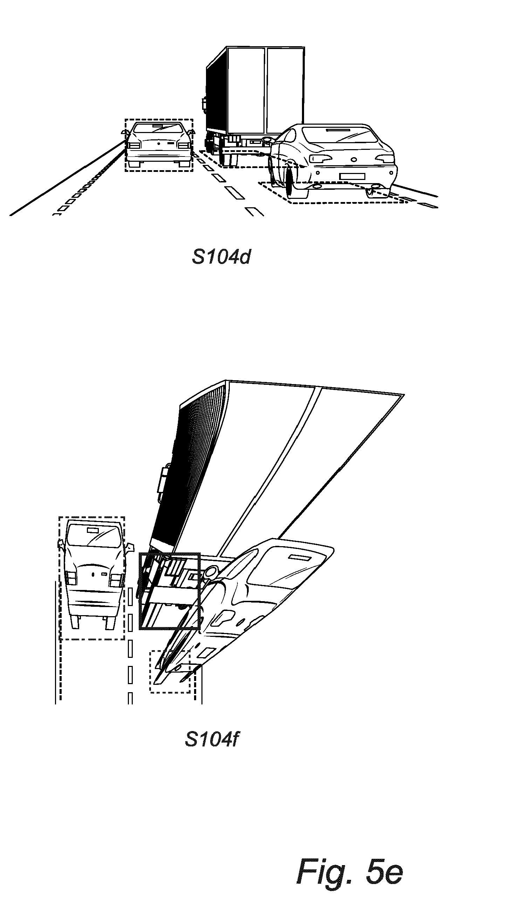

Figure 5e illustrates the images resulting from steps S104d and S104f, respectively.

Further, by attaining a bird's eye view of the object as provided by the perspective-transformed image, i.e. a top-view area of the object is given by the detected width and length, not only can the shape of the object be detected, but also motion characteristics can be determined, Hence, if an object is detected to be a truck, it can be assumed to be slower and have a greater turning radius than e.g. a car. If the object area as detected by the attained bird's eye view is complemented with the detected height of the object, the object can be detected with an even greater certainty.

In step S105, as was previously described in Figure 4, the processor 102 determines whether the objects were detected in both the originally captured image and the perspective-transformed image (see images S102 and S104, respectively). In this particular example, the two cars and the truck have indeed been detected and the correctness of the detection can thus be verified as is illustrated in the two images denoted S105.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A method of detecting an object in a vicinity of a motor vehicle, comprising:

    capturing (S101) at least one image of said vicinity;
    performing (S102) object detection on the at least one captured image;
    transforming (S103) a perspective of the at least one captured image;
    performing (S104) object detection on the perspective-transformed image; and
    verifying (S105) correctness of the object detection, if the object is detected in the at least one captured image as well as in the perspective-transformed image.

2. The method according to claim 1, wherein the object detection (S102, S104) is performed by:

    comparing image data extracted from the at least one captured image with one or more image templates corresponding to a predefined object to be detected.

3. The method according to claims 1 or 2, wherein the object detection comprises:

    determining one or more of object position, object velocity and object type.

4. The method according to any one of claims 1-3, further comprising:

    detecting (S104a) a width and/or length of the object in the perspective-transformed image; and
    matching (S104b) the detected width and/or length of the object in the perspective-transformed image to the object detected in the at least one captured image based on position of the respective object.

5. The method according to claim 4, further comprising:

    determining (S104d, S104f) a volume of the object from the detected width and/or length and a detected height of the object.

6. The method according to claims 4 and 5, further comprising:

    detecting the object by assuming that the object has a shape of a rectangular prism defined by the detected width, length and height.

7.  The method according to any one of claims 4-6, further comprising:

    predicting a movement of the detected object by taking into account the detected width and/or length and/or height.

8.  A system (100) for detecting an object in a vicinity of a motor vehicle, comprising
    a camera (101) configured to capture at least one image of said vicinity; a processor (102); and
    a memory (103) containing instructions (104) executable by the processor, whereby the system is operative to:

    perform object detection on the at least one captured image;
    transform a perspective of the at least one captured image;
    perform object detection on the perspective-transformed image; and
    verify correctness of the object detection, if the object is detected in the at least one captured image as well as in the perspective-transformed image.

9.  The system (100) according to claim 8, wherein the processor (102) is configured to perform object detection by:

    comparing image data extracted from the at least one captured image with one or more image templates corresponding to a predefined object to be detected.

10. The system (100) according to claims 8 or 9, wherein the processor (102) is configured to perform object detection by:

    determining one or more of object position, object velocity and object type.

11. The system (100) according to any one of claims 8-10, the processor (102) further being configured to:

    detect a width and/or length of the object in the perspective-transformed image; and
    match the detected width and/or length of the object in the perspective-transformed image to the object detected in the at least one captured image based on position of the respective object.

12. The system (100) according to claim 11, the processor (102) further being configured to:

    determine a volume of the object from the detected width and/or length and a detected height of the object.

13. The system (100) according to claims 11 and 12, the processor (102) further being configured to:

    detect the object by assuming that the object has a rectangular shape defined by the detected width, length and height.

14. The system (100) according to any one of claims 11-13, the processor (102) further being configured to:

    predict a movement of the detected object by taking into account the detected width and/or length and/or height.

15. A computer program (104) comprising computer-executable instructions for causing a system (100) to perform steps recited in any one of claims 1-7 when the computer-executable instructions are executed on a processing unit (102) included in the system (100).

16. A computer program product comprising a computer readable medium (103), the computer readable medium having the computer program (104) according to claim 15 embodied therein.

*Fig. 1*

Original image — S101

S102 — Original object detection

Perspective transform — S103

Perspective transformed object detection — S104

S105 — Detection verification

Detection confirmed          No confirmation

*Fig. 2*

Fig. 3

Fig. 4

Capture image — S101

↓

Detect objects in original image — S102

↓

Perform perspective transform — S103

↓

Detect objects in perspective transformed image — S104

↓

Detect edges in perspective transformed image and find object length and width — S104a

↓

Match objects in original and perspective transformed image based on position — S104b

↓

Object width AND length? — S104c

No → Object width? — S104e

No →

Yes ↓ S104d

Force rectangular shape based on object height AND width AND length

Yes ↓ S104f

Force rectangular shape based on height AND width AND length, assume constant length for non-visable edge

↓

Verify correctness — S105

Reset

*Fig. 5a*

S101

S102

S103    Fig. 5b

S104

S104a

Fig. 5c

S104b

Fig. 5d

S104d

S104f

*Fig. 5e*

Europäisches
Patentamt

European
Patent Office

Office européen
des brevets

**EUROPEAN SEARCH REPORT**

Application Number

EP 14 18 7635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GWANG YUL SONG ET AL: "Vehicle detection by edge-based candidate generation and appearance-based classification", INTELLIGENT VEHICLES SYMPOSIUM, 2008 IEEE, IEEE, PISCATAWAY, NJ, USA, 4 June 2008 (2008-06-04), pages 428-433, XP031318784, ISBN: 978-1-4244-2568-6 * sect.2 * | 1-7 | INV. G06K9/00 |
| X | Jon Arrospide Laborda ET AL: "Vision-based vehicle detection and tracking with a mobile camera using a statistical framework", PhD Universidad Politécnica de Madrid, 1 January 2012 (2012-01-01), XP055179701, Retrieved from the Internet: URL:http://oa.upm.es/11657/1/JON_ARROSPIDE _LABORDA.pdf [retrieved on 2015-03-27] * sect.2.4.2, 2.5.4, 3.2, 4.5.4.1, 4.5.4.3 * | 1-16 | |
| A | Massimo Bertozzi ET AL: "Real-Time O b s t acle Detection using S t ereo Vision", , 1 January 1996 (1996-01-01), XP055179621, Retrieved from the Internet: URL:http://www.eurasip.org/Proceedings/Eus ipco/1996/paper/a_3.pdf [retrieved on 2015-03-26] * the whole document * | 1-16 | TECHNICAL FIELDS SEARCHED (IPC)<br><br>G06K G06T |

The present search report has been drawn up for all claims

| Place of search | Date of completion of the search | Examiner |
|---|---|---|
| The Hague | 30 March 2015 | Darolti, Cristina |

EPO FORM 1503 03.82 (P04C01)

**EP 3 002 708 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6834232 B